# EUROPEAN PATENT SPECIFICATION

(11) **EP 4 078 340 B1**
(45) Date of publication and mention of the grant of the patent: **22.10.2025**
(21) Application number: 20903954.4
(22) Date of filing: 17.12.2020
(51) Int. Cl.: G06F 3/06, G06F 11/14, H04L 9/06, H04L 9/08, H03M 7/30, G06F 3/00, G06F 16/732, G06F 16/17, G06F 16/00, G06F 16/10, G06F 16/174, G06F 16/71

(54) **SYSTEMS AND METHODS FOR SKETCH COMPUTATION**
SYSTEME UND VERFAHREN ZUR SKIZZENBERECHNUNG
SYSTÈMES ET PROCÉDÉS DE CALCUL D'ESQUISSE

(30) Priority: 18.12.2019 US 201916718686; 18.12.2019 US 201916718703; 18.12.2019 US 201916718714
(43) Date of publication of application: 26.10.2022
(73) Proprietor: Granica Computing, Inc., Mountain View, CA 94041 (US)
(72) Inventor: PONNALA, Santhosh Rahul, Mountain View, California 94043 (US); VAISH, Tarang, Mountain View, California 94043 (US)
(74) Representative: TLIP Limited
(86) International application number: PCT/US2020/065711
(87) International publication number: WO 2021/127245

(56) References cited:
- US-A1- 2012 166 448
- US-A1- 2015 293 817
- US-A1- 2016 042 007
- US-A1- 2017 177 271
- US-A1- 2019 079 947
- US-A1- 2019 171 624
- US-A1- 2019 334 803
- US-B1- 8 918 390
- US-B1- 9 141 301
- US-B1- 9 189 402
- ZHUKOV M.A., AFANASIEV D.B.: "Analysis and estimation of the trie minimum level in non-hash deduplication system", SCIENTIFIC AND TECHNICAL JOURNAL OF INFORMATION TECHNOLOGIES, MECHANICS AND OPTICS, vol. 15, no. 3, 15 May 2015 (2015-05-15), pages 470 - 475, XP055837817, ISSN: 2226-1494, DOI: 10.17586/2226-1494-2015-15-3-470-475

## Description

### CROSS-REFERENCE

This application claims priority to U.S. Patent Application No. 16/718,686 filed on December 18, 2019, U.S. Patent Application No. 16/718,703 filed on December 18, 2019, and U.S. Patent Application No. 16/718,714, filed on December 18, 2019.

### BACKGROUND

Cloud storage systems can store large amounts of data from client applications, for example enterprise applications. Quite often a substantial portion of the incoming data may be duplicative. A large amount of memory, storage space, and processing power may be required to store and process the data. In some cases, data can be reduced prior to storage, for example using deduplication or compression techniques. However, large scale data reduction using small chunks and 1: 1 chunk comparisons had been shown to be technically challenging or impractical, due to the large index table generated which consumes significant memory space and reduces performance (by adding computational burden on both the write and read process). As result, conventional deduplication techniques are generally unable to handle data reduction on hundreds of terabyte or petabyte scale, in particular the large volumes of data generated by enterprise applications.

US 9 141 301 B1 describes a method of identifying live data chunks and a chunk identifier from a file recipe and the chunk identifier is added to a set of live data chunks and teaches a delta compression process, wherein the data set is divided into a set of fixed-size data chunks, from which calculate a fingerprint utilised to deduplicate the data chunks in the set of data and wherein a next chunk in a stream or queue of data chunks is selected to process serially or in parallel.

### SUMMARY

With the exponential scaling in data generation, a need is recognized herein for methods and systems that can efficiently handle data reduction on a large scale, while maintaining or improving computing performance. Data reduction can lead to a decrease in operational costs with respect to computational resources and storage.

The present disclosure provides systems and methods that are configured to optimally reduce data on a large scale (e.g. on at least a petabyte scale) at a high throughput (e.g. on at least terabyte level per day, or hundred terabyte per day, or multiple terabytes per day, etc). The systems and methods herein can be applied to data generated by various client applications, for example enterprise applications. As used herein, the term "data" may refer to any type of data, for example structured data, unstructured data, time series data, relational data, and the like. The term "enterprise application" may refer to a large software system platform that is developed using enterprise architecture and designed to operate in a corporate environment such as business or government. Although some embodiments of the present disclosure have been described with respect to enterprise applications, it should be appreciated that some embodiments herein can be applicable or adapted for non-enterprise applications or other smaller scale applications.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respect. Accordingly, the drawings and description are to be regarded as illustrative in nature, and not as restrictive.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "figure" and "FIG." herein), of which:
**FIG. 1** illustrates a module for deduplicating data prior to storing data, in accordance with some embodiments of the present disclosure.
**FIG. 2** illustrates pre-chunking a data stream into a set of data blocks and chunks, in accordance with some embodiments of the present disclosure.
**FIG. 3** illustrates a flow diagram for segmenting a data stream, in accordance with some embodiments of the present disclosure.
**FIG. 4** illustrates pre-chunking a data stream into a set of variable-sized segments and chunks, in accordance with some embodiments of the present disclosure.
**FIG. 5** illustrates a flow diagram for determining variable-sized segments, in accordance with some embodiments of the present disclosure.
**FIGs. 6A** **and** **6B** illustrate a flow diagram and elements for computing a sketch, in accordance with some embodiments of the present disclosure.
**FIGs. 7A** **and** **7B** illustrate a flow diagram for comparing sketches, in accordance with some embodiments of the present disclosure.
**FIGs. 8A****,** **8B****,** **8C****,** **8D****, and** **8E** illustrate a flow diagram for performing a differencing operation, in accordance with some embodiments of the present disclosure.
**FIG. 9** illustrates a flow diagram for data reconstruction, in accordance with some embodiments of the present disclosure.
**FIG. 10** illustrates the ecosystem for the data reduction system, in accordance with some embodiments of the present disclosure.
**FIG. 11** illustrates the modules for the data reduction system, in accordance with some embodiments of the present disclosure.
**FIG. 12** shows a computer system that is programmed or otherwise configured to implement methods provided herein.

### DETAILED DESCRIPTION

While various embodiments of the invention have been shown and described herein, it will be obvious to those skilled in the art that such embodiments are provided by way of example only. Numerous variations, changes, and substitutions may occur to those skilled in the art

Whenever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

Whenever the term "no more than," "less than," or "less than or equal to" precedes the first numerical value in a series of two or more numerical values, the term "no more than," "less than," or "less than or equal to" applies to each of the numerical values in that series of numerical values. For example, less than or equal to 3, 2, or 1 is equivalent to less than or equal to 3, less than or equal to 2, or less than or equal to 1.

The term "real-time," as used herein, generally refers to a simultaneous or substantially simultaneous occurrence of a first event or action with respect to occurrence of a second event or action. A real-time action or event may be performed within a response time of less than 1 second, tenth of a second, hundredth of a second, a millisecond, or less relative to at least another event or action. A real-time action may be performed by one or more computer processors.

The term "sketch," as used herein, generally refers to a fingerprint of at least one data unit, such as at least one data segment. A sketch may be used to describe or characterize data segment(s) of a file or object. A sketch may include a set of features that can be used to describe or characterize data segment(s).

The term "weak hashing algorithm," or the like, as used herein, generally refers to a hashing algorithm that maximizes the number of data chunks hashed per unit of time at the cost of decreasing the total number of collisions of hashed data chunks. Collisions may occur when a hashing algorithm produces the same hash value for different data chunks.

The term "strong hashing algorithm," or the like, as used herein, generally refers to a hashing algorithm that minimizes the total number of collisions of hashed data chunks at the cost of maximizing the number of hashed data chunks hashed per unit of time. Collisions may occur when a hashing algorithm produces the same hash value for different data chunks.

### Overview

Data reduction may be the process of reducing the amount of capacity required to store data. The data reduction system described herein can increase storage efficiency, improve processing/computing speed performance, and reduce costs, among other advantages.

Conventional methods to handle data reduction for data storage systems generally rely on segmenting data into chunks, generating fingerprints (e.g., hashes) for the chunks of data, and storing the fingerprints in an in-memory table. After the fingerprints are computed, a lookup can be performed in-memory to compare a chunk to a new chunk. Upon a fingerprint match in memory, if the new chunk is considered to be unique, the new chunk may be stored. If the new chunk is considered to be the same, a pointer may be stored that points to the originally stored chunk. This process requires significant storage space to store each fingerprint. Additionally, this process requires significant processing and computational time to generate each fingerprint for each chunk and then to compare each fingerprint corresponding to each chunk to another fingerprint of a different chunk. Calculating and processing fingerprints for each chunk can be time intensive and computationally expensive.

The data reduction system and methods described herein can address at least the shortcomings of conventional data deduplication techniques. For example, instead of doing a direct comparison of fingerprints (hashes) between all of the individual data chunks, the data reduction system and methods provided herein can use sketches to describe or characterize large segments of data in a file or object, and compare sketches to determine if two or more segments are homogeneous (e.g., similar). Sketches may comprise a set of features that can be used to describe or characterize large segments data. If the sketches of two or more segments are determined to be substantially similar, the sketches can be subsequently differenced at a more granular level (e.g., feature level, chunk level, etc.), at which time fingerprint comparisons can be performed. A single pointer may be generated for a group of chunks with matching fingerprints, instead of a pointer for an individual chunk. If the sketches of two or more segments are determined to be substantially different, the segments and their set of features may be stored in the database, and differencing at the chunk level need not be required, which can save computational resources for deduplication of other similar segments.

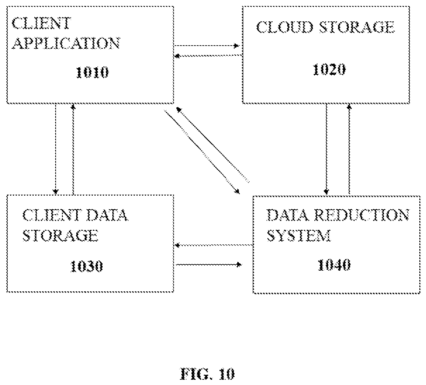

A data reduction system **1040** in accordance with some embodiments herein may exist in an ecosystem, for example, as shown in **FIG. 10****.** The ecosystem may comprise one or more client applications **1010,** and one or more storage modules **1020** and **1030.**

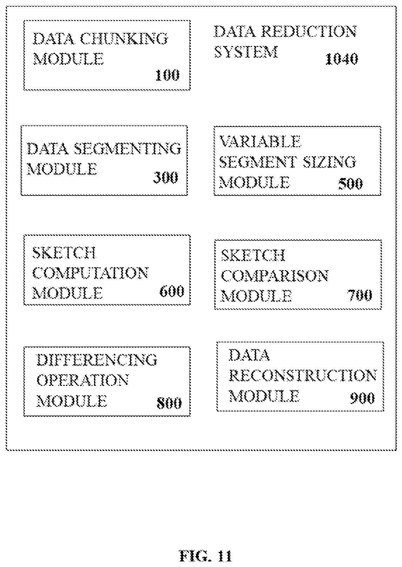

The data reduction system **1040** described herein may comprise one or more modules. As shown in **FIG. 11****,** the modules may include a sketch computation module **600,** a sketch comparison module **700,** a differencing operation module **800,** a data reconstruction module **900,** a data chunking module **100,** a data segmenting module **300,** a variable segment sizing module **500,** or various combinations thereof, etc. The functionalities of each module may be generally described as follows.

The sketch computation module can be configured to compute one or more sketches, for one or more data segments generated from one or more input data streams. After the sketches have been generated for segments, the sketch comparison module can determine if the sketch for a new segment is substantially similar or non-similar to the sketch for an earlier segment. If the two sketches are determined to be substantially non-similar, the new segment may be stored in a database. If the two sketches are determined to be substantially similar, the differencing operation module is then utilized to compare the chunks between the segments and determine if the segments have one or more duplicative chunks that are common to both segments. The differencing module can be configured to generate a sparse index array and store pointers for blocks of duplicative chunks. The blocks of duplicative chunks may be stored in a database as homogeneous fragments. Upon receipt of a read request from a client application, the data reconstruction module can reconstruct a requested object (that is requested from the client application) using the sparse index array and the homogenous fragments generated by the differencing module. Additional aspects relating to the breaking up of data using the data chunking module, data segmenting module, or variable segment sizing module are further described in detail elsewhere herein.

### I. Sketch Computation

In an aspect, a method for sketch computation is provided. A sketch may be a data structure supporting a pre-specified set of queries and updates to a database. A sketch may consume less memory space compared to storing all information for an entire segment. A sketch may be a fingerprint of a segment. Sketch computation may be used to decrease memory requirements and provide faster speeds for data write and read processes. Sketch computation may involve generating a set of features from at least one segment. The set of features may be used as an approximate identifier of the segment (e.g. as a fingerprint) such those features (or a subset of those features) could be used to identify similar segments. A sketch can be computed by determining a set of features using hashing algorithms (e.g., hashing function) and/or other algorithms (e.g. non-hashing algorithms) as described elsewhere herein. A sketch may be representative of one or more data segments. In some embodiments, a sketch may be a metadata value. A sketch may be utilized to find matching or similar sketches associated with other segments from one or more input data streams. A sketch may be utilized to find matching or similar sketches associated with previously processed segments.

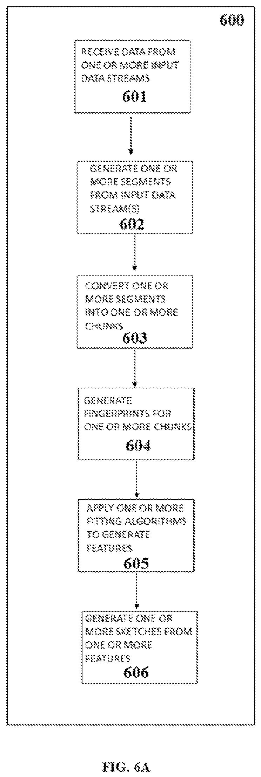

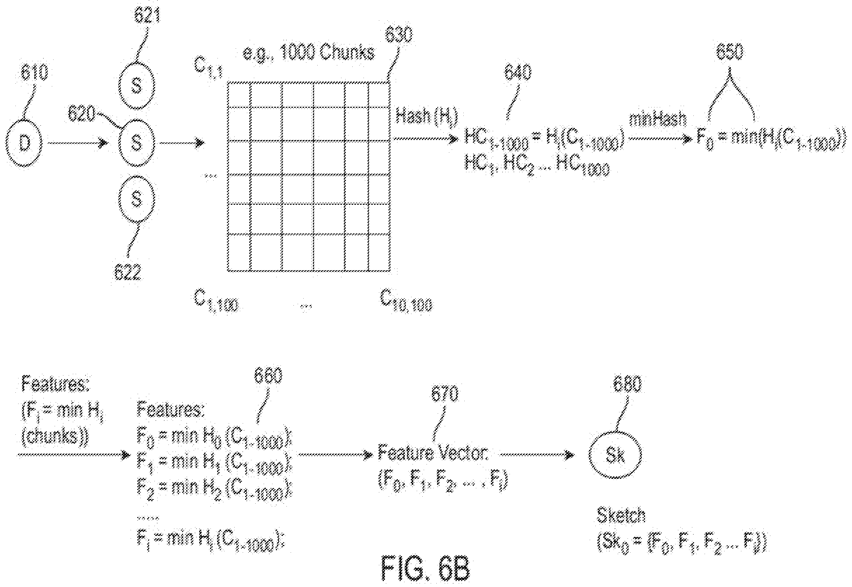

A sketch may be computed using the sketch computation module **600.** An example of a sketch computation module and sketch computation is illustrated with **FIGs. 6A** and **6B****.** As shown in **FIG. 6B****,** an input data stream (**610**) may be used for sketch computation. The method may comprise receiving an input data stream from one or more client applications (step **601**). The input data stream may include a sequence of data made available over time. The input data stream may be a sequence of digitally encoded coherent signals (e.g., packets of data, data packets, network packets, etc) used to transmit or receive information that is in the process of being transmitted. The input data stream may comprise data, data packets, files, objects, etc. The input data stream may include a set of extracted information. The input data stream may comprise raw data (e.g., unprocessed data, unstructured data, etc). The input data stream may comprise structured data. The input data stream may be, for example, network traffic, graph streams, client-application data streams, or multi-media streams, etc. The input data stream may comprise at least one segment.

The client application may be an application that is configured to run on a workstation or a personal computer. The workstation or personal computer may be in a network. The client application may include an enterprise application. In some embodiments, the enterprise application may be a large software system platform designed to operate in a corporate environment. The enterprise application may be designed to interface or integrate with or without other applications used within an organization. The enterprise application may be a computer software used to satisfy the needs of an organization rather than individual users. Such organizations may include, for example, businesses, governments, etc. The enterprise application may be an integral part of a (computer-based) information system. Enterprise applications may assist in, for example, data management, business intelligence, business process management, knowledge management, customer relationship management, databases, enterprise resource planning, enterprise asset management, low-code development platforms, supply chain management, product data management, product lifecycle management, networking and information security, online shopping, online payment processing, interactive product catalogue, automated billing systems, security, Business Process Management, enterprise content management, IT Service Management, customer relationship management, enterprise resource planning, business intelligence, project management, collaboration, human resource management, manufacturing, occupational health and safety, enterprise application integration, information storage or enterprise forms automation, etc. The complexity of enterprise applications may require specialized capabilities and specific knowledge.

As shown in **FIG. 6B****,** the method may comprise generating at least one segment from the input data stream (step **602).** The method may further comprise computing a sketch of the at least one segment as described elsewhere herein. As shown in **FIG. 6B****,** one or more segments **620-622** in an input data stream **610** can be generated (step **602**). In some embodiments, a plurality of segments can be generated from the input data stream. The plurality of segments may comprise at least about 1, 5, 10, 15, 25, 100, 1000, 10000 or more segments. The plurality of segments may have sizes of at least about 1 kilobyte (KB), 10 KB, 100 KB, 500 KB, 1 megabyte (MB), 2 MB, 3 MB, 4 MB, 5 MB, 6 MB, 7 MB, 8 MB, 9 MB, 10 MB or more. The plurality of segments may have sizes of at most about 10 MB, 9 MB, 8 MB, 7 MB, 6 MB, 4 MB, 3 MB, 2 MB, 1 MB, 500 KB, 100 KB, 10 KB, or less. The plurality of segments may have sizes from about 100 KB to 10 MB, 500 KB to 5 MB, or 1 MB to 4 MB. In some embodiments, each of the plurality of segments may have a size ranging from about 1 MB to about 4 MB. In some embodiments, the plurality of segments may have different sizes ranging from about 1 MB to about 4 MB.

The segment can be generated from the input data stream as described elsewhere herein. Each segment may comprise a plurality of chunks. As shown in **FIG. 6B****,** the segment may be converted into a plurality of chunks **630.** The segment may be converted into, for example, 1000 chunks. A chunk may comprise data. A chunk may be a fragment of information. A chunk may be a unit of information. A chunk may contain a header. The header may indicate parameters of the chunk. The parameters may include, for example, the type of chunk, comments, size, etc. The process of taking a segment and producing one or more chunks may be called chunking. Chunking may comprise the division of data within a data segment into a number of sections (e.g., chunks) of continuous data (e.g., from the input data stream). Chunking can be used to, for example, reduce central processing unit (CPU) overhead or decrease latency. In some embodiments, the segment may comprise at least about 5, 10, 15, 25, 100, 1000, 10000 or more chunks. The segment may comprise from about 2 to 10000 chunks, 10 to 1000 chunks, or 25 to 100 chunks. In some embodiments, the segment may comprise at least about 1000 chunks. The plurality of chunks may be of a same length or variable lengths. The plurality of chunks may be of the same data size. The plurality of chunks may be of different data size. The plurality of chunks may have sizes of at least about 0.1 kilobytes (KB), 0.5 KB, 1 KB, 2 KB, 3 KB, 4 KB, 5 KB, 6 KB, 7 KB, 8 KB, 9 KB, 10 KB, 50 KB or more. The plurality of chunks may have sizes ranging from 0.1 KB to 10 KB, 0.5 KB to 7 KB, or 1 KB to 4 KB. In some embodiments, the plurality of chunks may have sizes ranging from 4 KB to 16 KB.

The method may further comprise generating a fingerprint for each chunk of the plurality of chunks using step **604** and further illustrated in **FIG. 6B****.** The fingerprint may be utilized to identify a specific data chunk. In some embodiments, the fingerprint may be generated using one or more hashing algorithms. The fingerprint may include one or more hash values generated by one or more hashing algorithms. As shown in **FIG. 6B****,** a hashing algorithm may be executed on the chunks (e.g. 1000 chunks) to generate a plurality of hash values **640** (e.g. 1000 hash values). Each hash value may be a fingerprint associated with each respective chunk. In some embodiments, more than one hash value may be calculated for a particular chunk.

The hashing algorithm (e.g., hash(ing) function) described herein may include any method that can be used to map data of arbitrary size to fixed-size values. The values returned by a hash function may be called hash values, hash codes, digests, or hashes. The values may be used to index a fixed-size table called a hash table. In some cases, a cryptographic grade hash functions may be used to generate a fingerprint. The cryptographic grade hash function may be keyed, unkeyed, or use a combination thereof. The hash functions may be selected from the group consisting of SHA-0, SHA-1, SHA-2, SHA-3, SHA-224, SHA-256, SHA-384, SHA-512, SHA-512/224, SHA-512/256, SHA3-224, SHA3-256, SHA3-384, SHA3-512, SHAKE128, SHAKE256, BLAKE-256, BLAKE-512, BLAKE2s, BLAKE2b, BLAKE2X, ECOH, FSB, GOST, Grøstl, HAS-160, HAVAL, JH, LSH, MD2, MD4, MD5, MD6, RadioGatún, RIPEMD, RIPEMD-128, RIPEMD-160, RIPEMD-320, Skein, Snefru, Spectral Hash, Streebog, SWIFFT, Tiger, Whirlpool, HMAC, KMCA, One-key MAC, PMAC, Poly1305-AES, SipHash, UMAC, VMAC, Pearson hashing, Paul Hsieh's SuperFastHash, Buzhash, Fowler-Noll-Vo hash function, Jenkins hash function, Bernstein hash djb2, PJW hash, MurmurHash, Fast-Hash, SpookyHash, CityHash, FarmHash, MetroHash, number hash, xxHash, tlha, cksum (Unix), CRC-16, CRC-32, Rabin fingerprint, tabulation hashing, universal one-way hash function, and Zobrist hashing. Additionally or alternatively, the fingerprint may also be generated using one or more non-hashing algorithms.

The method may further comprise generating a plurality of features for the segment. A sketch of a segment may comprise a set of features (e.g., characteristics) that are representative of, or unique to the segment. Feature generation or extraction can reduce the amount of resources required to describe the segment. Features may describe the most relevant information from the segment. The features of a segment may not change even as small variations are introduced into the chunks. The features may describe the relevant information from the segment such that the desired task (e.g., chunk comparison) can be performed by using the reduced representations (e.g., sketch comparison of the features) instead of using the entire set of chunks. The feature may include, for example, certain items associated with chunks within the segment. The items may include, for example, hash values generated by one or more hashing algorithms. The items may include, for example, an integer (e.g., an ID number, hash value), a data type, a file extension, etc.

The set of features in a sketch of a segment may comprise a minimum number of features that may be useable to uniquely identify or distinguish the segment. The set of features may comprise at least about 1, 2, 3, 4, 5, 10, 15, 25, 100, 100 or more features. The set of features may comprise at most about 100, 100, 25, 15, 10, 5, 4, 3, 2, or fewer features. The set of features may include from about 1 to 100, 2 to 25, 3 to 15, or 5 to 10 features. In some embodiments, the set of features in a sketch of a segment may range from about 3 to about 15 features. The set of features may comprise a linear combination of the features. The set of features may be used to approximate the segment.

In some embodiments, the set of features may be associated with a subset of chunks selected from the plurality of chunks. The set of features may comprise a set of fingerprints for the subset of chunks. The set of fingerprints may comprise chunk hashes for the subset of chunks. The subset of chunks may be less than about 1%, 5%, 10%, 15%, 20%, 25%, 30%, 40%, 50% of the plurality of chunks. The subset of chunks may be from about 1% to 50%, 5% to 40%, or 10% to 25% of the plurality of chunks. The subset of chunks may comprise at least about 1, 2, 3, 4, 5, 6, 7, 8, 9, 10, 11, 12, 13, 14, 15, 16, 17, 18, 19, 20, 50, 100, or more chunks. The subset of chunks may be selected from the plurality of chunks using one or more fitting algorithms on a plurality of hashes generated for the plurality of chunks. In some embodiments, the plurality of hashes may be generated using two or more different hash functions. The two or more different hash functions may include any of the hash functions as described elsewhere herein.

In some embodiments, the one or more fitting algorithms may be used to determine a minimum hash of the entire set of chunks or subset of chunks (step **605**). A feature may correspond to the minimum hash value for the entire set of chunks or subset of chunks. As shown in **FIG. 6B****,** the fitting algorithms may be used to obtain the minimum hash value of the 1000 hashes values (e.g., fingerprints; **650**) corresponding to a particular chunk. The one or more fitting algorithms may be used to compute the minimum hash value as the hash value for each chunk is generated. The one or more fitting algorithms may be used to compute the minimum hash value after all the hash values for the entire set of chunks has been generated. The minimum hash value for the set of chunks may be a feature (F₀, **650**) that can be used to represent or describe the 1000 chunks. In some embodiments, the one or more fitting algorithms may be used to determine a minimum hash for each function of the two or more different hash functions. In some cases, each feature of the set of features may comprise the minimum hash for each hash function of the two or more different hash functions. The set of features may comprise a vector of the minimum hashes of the two or more different hash functions.

In some embodiments, the one or more fitting algorithms may be used to determine a maximum hash of the entire set of chunks or subset of chunks. A feature may correspond to the maximum hash value for the entire set of chunks or subset of chunks. In some cases, the maximum hash value may be used, additionally or alternatively with the minimum hash value for determining a set of features. In some cases, a feature vector may comprise one or more features generated from a minimum hash value and/or one or more features generated from a maximum hash value. In some cases, a feature may be a linear combination of one or more hashes generated by the one or more hashing algorithms for the one or more chunks.

One or more hashing algorithms may be employed to generate one or more features (e.g., F₀, F₁, F₂, ... , Fᵢ), for example as shown in **FIG. 6B****.** For example, a SHA-2 hashing algorithm may be used to generate 1000 SHA-2 hash values. The minimum hash value in the set of SHA-2 hash values may be used to generate a first feature (F₀). Then a MD2 hashing algorithm may be used to generate 1000 MD2 hash function values. The minimum hash value in the set of MD2 hash values may be used to generate a second feature (F₁). The features may be generated simultaneously or concurrently. The features may be stored in a database or as described elsewhere herein. By storing features instead of individual fingerprints of the chunks (e.g., all of the hash values), the magnitude of the data storage and memory requirements can be reduced. For example, for a segment comprising 1000 data chunks, 10 features may be capable of representing the entire segment (or the entire set of chunks). Instead of storing 1000 hash values for the 1000 individual data chunks, the system described herein may only need to store 10 features, thus enabling the memory storage to be reduced by three orders of magnitude. In some cases, the one or more features may be associated with one or more particular chunks in the set of chunks. For example, a particular chunk (e.g., chunk 1,1) may have a hash value that is the minimum hash value in the set.

As shown in **FIG. 6B****,** the features may be combined to produce a feature vector **670**. The features may be used to generate a sketch **680** (step **606**). The sketch **680** can comprise the set of features. The sketch can comprise the one or more feature vectors. The sketch can be compared to one or more other sketches as described elsewhere herein. In some cases, the sketch may be computed using, for example, a spatiotemporal sketching algorithm, Count sketch, Count-min sketch, conservative update sketch, Count-Min-Log sketch, Slim-Fat sketch, or Weight-Median Sketch, etc. In some embodiments, the sketch may be generated using a resemblance hashing algorithm or similar function.

The sketch may be useable for inline deduplication of at least one other segment from an input data stream received from the one or more client applications. By using sketches for inline deduplication, reduction of large amounts of data (e.g. on a petabyte scale) can be accomplished. The sketch may be useable for inline deduplication without requiring a full index of the plurality of chunks. The sketch may be useable for inline deduplication without requiring a lookup of every chunk in the at least one other input data stream to the full index.

### II. Sketch Comparison

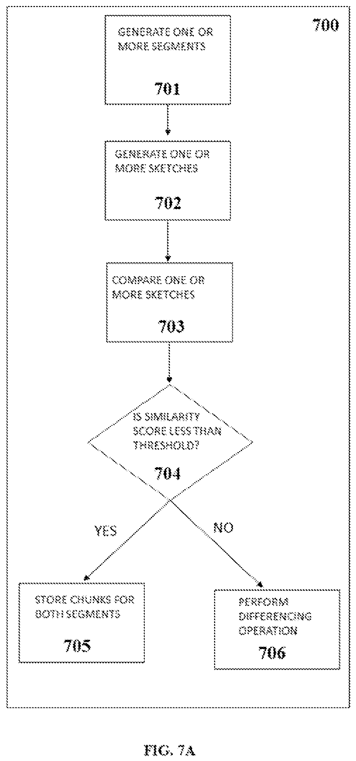

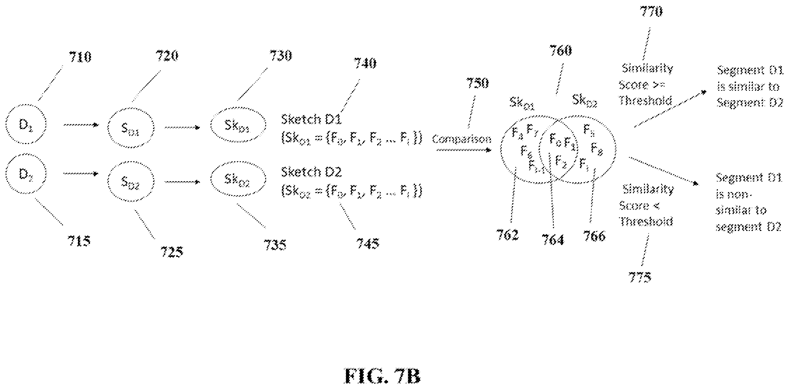

Sketch comparison may be performed using the sketch comparison module **700,** for example as illustrated in **FIG. 7A****.** The method may further comprise generating at least one other segment from the at least one other input data stream (step **701**). **FIG. 7B** illustrates a first input data stream **710** and a second input data stream **715,** that can be used to generate a first segment **720** and a second segment **725.** In some cases, the first segment **720** and the second segment **725** may be generated from the same data input stream. The second segment **725** may be generated using the methods described elsewhere herein. The method may further comprise computing a sketch of the second segment (step **702**). **FIG. 7B** illustrates the comparison of a sketch for the first segment **730** and a sketch of the second segment **745** (step **703**). The sketch for the second segment may be computed as described elsewhere herein. The sketch for the second segment may comprise another set of features (e.g., characteristics) that are representative of or unique to the second segment. **FIG. 7B** illustrates that the sketch **730** for the first segment may comprise a set of features **740** and that the sketch **735** for the second segment may also comprise a set of features **745.** The features above may be generated as described elsewhere herein.

The method may further comprise processing the first sketch and the second sketch, based at least in part on a similarity score to determine whether the second segment is probabilistically similar to the first segment (step **704**). The processing may comprise comparing the first set of features with the second set of features, to determine whether one or more features are common to both sets. As shown in **FIG. 7B****,** the sketch **730** of the first segment and the sketch **735** of the second segment may be compared **750** to determine features that are in both sets **764** and/or features that may not shared by both sets (**762, 766**). Each sketch can comprise a different number of features. For example, sketch **730** may comprise 10 features while sketch **735** may comprise 6 features. Each sketch can comprise the same number of features. For example, sketch **730** may comprise 10 features while sketch **735** may comprise 10 features.

The second segment may be determined to be probabilistically similar to the first segment when the similarity score is greater than or equal to a similarity threshold. The second segment may be determined to be probabilistically non-similar to the first segment when the similarity score is less than a similarity threshold. As illustrated in **FIG. 7B****,** if the similarity score is greater than or equal to a threshold **770,** the first segment and the second segment may be considered to be similar. In some cases, if the first segment and the second segment are considered to be similar, the method may further comprise performing a differencing operation. The differencing operation may be as described elsewhere herein. If the similarity score is less than or a threshold **775,** the first segment and the second segment may be considered to be non-similar. In some cases, if the first segment and the second segment may be considered to be non-similar, the one or more chunks of the second segment may be stored in a database (step **705**). The similarity threshold may be at least about 5%, 10%, 15%, 20%, 25%, 30%, 35%, 40%, 50%, 55%, 60%, 65%, 70%, 75%, 80%, 85%, 90%, 95%, 99%, or more. The similarity score threshold may be from about 5% to 99%, 10% to 90%, 20% to 80%, 30% to 70%, or 40% to 50%. In some embodiments, the similarity threshold may be at least about 50%.

The similarity score may be indicative of a degree of overlap between the first segment and the second segment. In some cases, for example, if the first segment has 10 features, and the second segment has 8 features, and 6 features are found to match in both sets, the similarity score may be 50% (e.g., 6 matching features/12 unique features). In some cases, the similarity score may be calculated relative to a particular segment. For example, if the first segment has 10 features, and the second segment has 8 features, and 6 features are found to match in both sets, the similarity score may be 6/10 (i.e., 60%) or 6/8 (i.e., 75%), respectively. In some cases, the number of features for the sketch of the first segment and the number of features for the sketch of the second segment may be the same. In some cases, the number of features for the sketch of the first segment and the number of features for the sketch of the second segment may be different.

The similarity score may be indicative of the number of matching features between the first segment and the second segment. As shown in **FIG. 7B****,** the features that match **764** may be found in both sketches. One or more features may be similar or identical both sets. One or more features may not be shared by or common to both sets. One or more features may be a combination of matching and non-matching features between the first segment and the second segment. The second segment may be of a same size as the first segment. The second segment may be of a different size than the first segment. Each of the first segment and the second segment may have a size ranging from about 1 megabyte (MB) to about 4 MB. Each of the first segment and the second segment may have a size ranging as described elsewhere herein.

### III. Differencing Operation

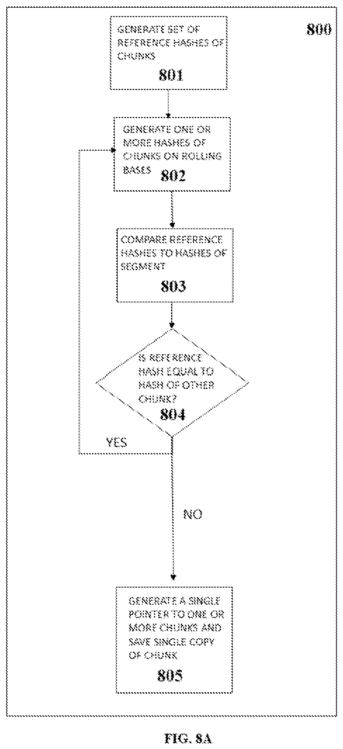

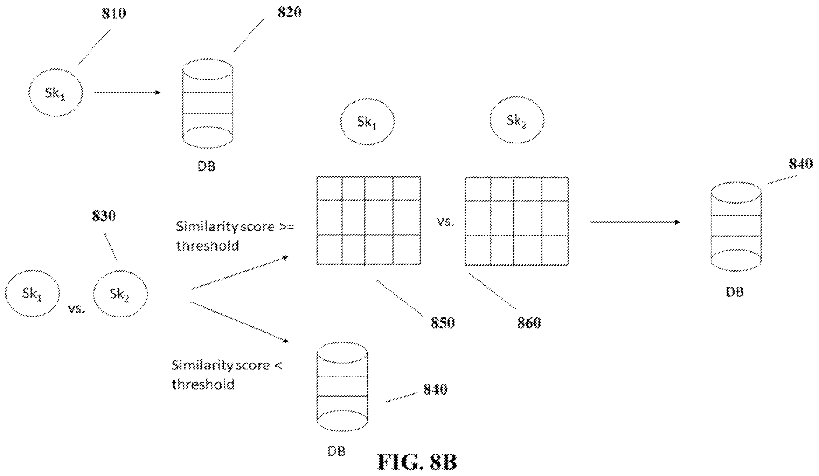

A data differencing operation may be performed using the differencing operation module **800** and illustrated for example in **FIG. 8A****.** The method may further comprise storing the first segment and the features of the second segment in a database. As shown in **FIG. 8B****,** the sketch of the segment (e.g., the set of features of the segment, **810**) and the chunks that correspond to the sketch may be stored in a database (**820, 840**). The method may further comprise storing the second segment and its set of features (e.g., sketch, **830**) in a database when the similarity score is less than a similarity threshold. For example, if the similarity score between sketch and the another sketch is 15%, and the threshold value is set to 40%, the second segment and its set of features can be stored in the database. As shown in **FIG. 8B**, when two sketches are compared (e.g., **810** vs **830**) and the similarity score is below a threshold value, the features of the sketch and the chunks that correspond to that segment may be stored in the database **840**. In some cases, the databases may be the same. In some cases, the databases may be different.

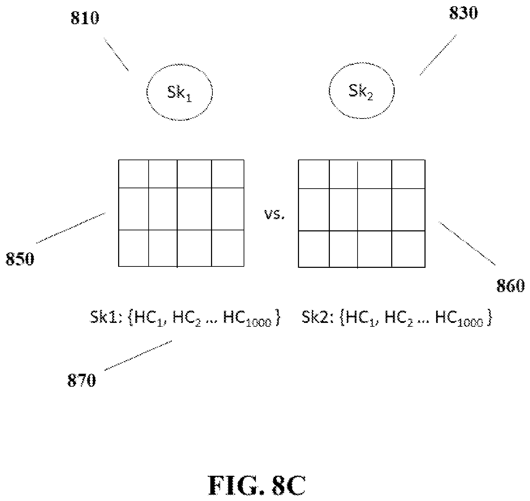

The method may further comprise performing a differencing operation on the second segment to the first segment when the similarity score is greater than or equal to the similarity threshold. For example, if the similarity score between a sketch and another sketch is 65%, and the threshold value is set to 40%, the chunks of the first segment and the chunks of the second segment may be differenced. As shown in **FIG. 8C****,** when the similarity score of the first segment and the second segment is greater than or equal to a threshold, the individual chunks of both segments can be compared (e.g., **850** vs **860**). The differencing operation may comprise generating a reference set of hashes (**870**) for the plurality of chunks of the first segment (step **801**). The hashes of the plurality of chunks of the first segment may be generated (step **802**) using one or more hashing algorithms as described elsewhere herein. The hashes of the plurality of chunks may be previously generated hashes. The method may comprise storing the reference set of hashes in a memory table.

The reference set of hashes may comprise weak hashes and/or strong hashes. The strength of the hash may be dependent on the hashing algorithm. A weak hashing algorithm may generate one or more weak hashes. A strong hashing algorithm may generate one or more strong hashes. The weak hashes and/or strong hashes may be generated using one or more hashing algorithms described elsewhere herein. A weak hashing algorithm may be a hashing algorithm with a weak collision resistance. A weak collision resistance may indicate that the probability of failing to find a collision is not negligible. A strong hashing algorithm may be a hashing algorithm with a strong collision resistance. A strong collision resistance may indicate that the probability of failing to find a collision is negligible. A strong hashing algorithm may make it difficult to find an input that maps to the same hash value. A weak hashing algorithm may make it easier than a strong hashing algorithm to find an input that maps to the same hash value. A weak hashing algorithm may be more likely to cluster hash values (e.g., mapping of keys to the same hash value) than a strong hash function. A strong hash function may have a uniform distribution of hash values.

The strength (e.g., weak to strong) of a hashing algorithm may be on a gradient scale. The strength of a hashing algorithm may be dependent on the time scale of using the hashing algorithm, the complexity of the hashing algorithm, the implementation of the hashing algorithm, central processing unit benchmarks, or cycles per byte, etc. The strength of a hashing algorithm may be determined using one or more statistical tests. The one or more statistical tests may measure, for example, whether the hash function can be readily distinguished from a random function. A test may be, for example, to determine whether the hash function displays the avalanche effect. The avalanche effect may be an effect where any single-bit change in the input key should affect on average half the bits in the output.

A weak hashing algorithm may maximize the number of data chunks hashed per unit of time. A weak hashing algorithm may maximize the number of data chunks hashed per unit of time at the cost of decreasing the total number of collisions of hashed data chunks. Collisions may be when a hashing algorithm produces the same hash value for different data chunks. A strong hashing algorithm may minimize the total number of collisions of hashed data chunks. A strong hashing algorithm may minimize the total number of collisions of hashed data chunks at the cost of maximizing the number of hashed data chunks hashed per unit of time. Collisions may be when a hashing algorithm produces the same hash value for different data chunks.

The reference set of hashes may be generated using a high throughput hashing function having a throughput on at least a gigabyte scale. In some cases, the high throughput hashing function may be a weak hashing algorithm. The hashing algorithm may be a hashing algorithm as described elsewhere herein. The degree of similarity between the two sketches/segments may determine the strength of the hashing algorithm used for the high throughput hashing function. For example, if the two sketches/segments have a certain similarity score, a particular hashing algorithm may be selected over another hashing algorithm. For instance, if the similarity score is considered to be high between two sketches of two segments, a weak hashing function may be employed. A weak hashing function may be employed as the sketch comparison may be a first order approximation in quantifying similarity (e.g., the sketch may assist in determining that two segments are similar, and as a result, a weak hash may be used). Conversely, a strong hashing function may be employed when the similarity score for the set of features between the two segments is low. In some cases, a hashing function may not be employed if the two sketches have a low similarity score.

In some embodiments, a first hashing algorithm may be used if the similarity score is between a range of, for example, 70% to 90%. In some cases, if the similarity score is greater than, for example, 90%, the method may use a second hashing function that is different from the first hash function. If the similarity score is less than, for example, 70% but greater than 50%, the method may use a third hashing function. If the similarity is below, for example, 50%, the method may not use a hashing algorithm and may instead store the two sketches (e.g., features) and the two segments in a database. In some cases, the benefits of differencing two segments may be marginal if the two segments are considered to be substantially non-similar after comparing the sketches of the two segments.

In some cases, a variety of one or more parameters may be altered to assist the hashing function to maximize the hashing throughput capacity. For example, the parameters may be used to, decrease the number of clock cycles needed to produce a hash value, adjust the hash value memory foot-print, or the data word size, etc. The hash may be computed iteratively. The hash may be computed iteratively by adjusting the byte size given to the hashing algorithm. The byte size may be at least about 1 byte, 2 bytes, 4 bytes, 8 bytes, 16 bytes, 32 bytes, 64 bytes, or more. The byte size may be at most about 64 bytes, 32 bytes, 16 bytes, 8 bytes, 4 bytes, 2 bytes, 1 byte, or less. The byte size may be from about 1 byte to 64 bytes, 1 byte to 16 bytes, or 1 byte to 4 bytes.

In some embodiments, the performance of a hashing algorithm for high throughput hash value generation may be dependent on the data size (e.g., gigabyte) of the throughput. The performance of a hashing algorithm may be dependent on the speed of the throughput of the data (e.g., gigabyte per second) for hash value generation. The performance of a hashing algorithm may be dependent on the strength of the hashing algorithm. For example, a weak hashing algorithm may lead to improved performance if quicker hash value generation is desired as a weak hashing function generally produces hash values quicker than a strong hashing function.

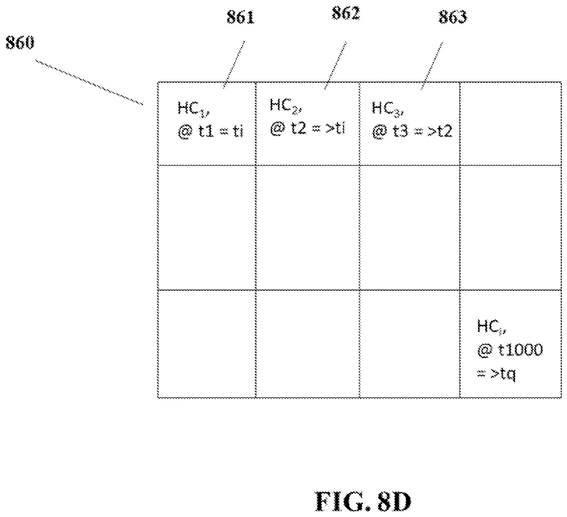

In some embodiments, the differencing operation may further comprise generating, on a sequential rolling basis, a hash for a chunk of the plurality of chunks of the second segment. For example, the hash values for 1000 chunks may be generated by generating a first hash value for a first chunk, then a second hash value for a second chunk at a later time, until 1000 hash values have been generated or a subset of 1000 hash values are generated. As shown in **FIG. 8D****,** the hash value of a chunk in the second segment may be computed (HC₁, **861**) at an initial time (e.g., t1). The second hash value of a chunk (HC₂, **862**) in the second segment may be computed at time after t1 (e.g., t2). The chunks may be adjacent to each other. Alternatively, the chunks need not be consecutive chunks (e.g., **861** vs **863**). In some cases, the hash may be compared to the reference set of hashes to determine if there is a match, before generating another hash for a next chunk of the plurality of chunks of the second segment. In some cases, all hashes for the plurality of chunks of the second segment may be generated concurrently.

The differencing operation may further comprise comparing the hash to the reference set of hashes to determine if there is a match (step **803**). The differencing operation may further comprise continuing to generate one or more other hashes for one or more subsequent chunks of the plurality of chunks, as long as the hash and the one or more other hashes find a match from the reference set of hashes (steps **802-804**). The differencing operation may further comprise generating and storing a single pointer referencing to the chunk and the one or more subsequent chunks, upon detecting that a hash for a follow-on chunk does not find a match from the reference set of hashes (step **805**). The hashes may be weak hashes as described elsewhere herein.

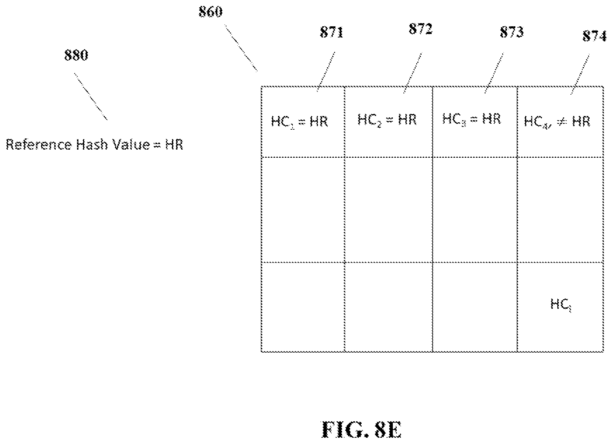

As shown in **FIG. 8E****,** the second segment **860** may comprise a plurality of chunks that may be in sequential order. The first hash value **871** may be compared to a reference hash value **880.** The reference hash may be a hash generated from any segment prior to the hashing of a later segment. The reference hash may be a hash from the first segment. The reference hash may be a hash stored in a database. The reference hash value may be equivalent to the first hash value. In some cases, instead of generating a pointer at this point in time, the sequential chunk may be examined. If the sequential chunk (e.g., **872**) has the same hash value as the reference hash value, the method may comprise continuing to check the hash value of each chunk (e.g., **871** to **874**) until there is a mismatch (e.g., the hash value does not match the reference hash value, **874**). At this point in time, a pointer may be stored referencing to each subsequent chunk (**871** to **873**). Storing pointers following sequential chunk analysis can lead to improved computation speeds as less pointers may need to be accessed, in addition to a decrease in memory usage as fewer pointers may need to be stored.

The differencing operation may be performed inline as one or more input data streams are received from the one or more client applications. In some alternative embodiments, the differencing operation may be performed offline. For example, the differencing operation may be performed offline after one or more segments have been stored in a database. The differencing operation may be used to reduce the first segment and the second segment into a plurality of homogenous fragments. The plurality of homogenous fragments may be stored in one or more cloud object stores. The differencing operation may be used to produce a sparse index comprising a reduced set of pointers. The reduced set of pointers may comprise a single pointer referencing to a series of sequential chunks. The use of homogenous fragments can reduce memory storage requirements as fewer chunks need to be stored after the differencing operation.

### IV. Data Reconstruction

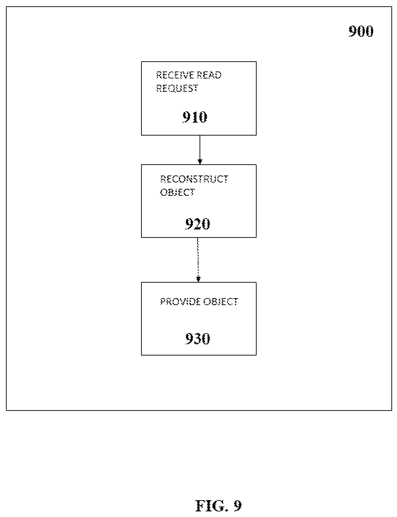

Reconstruction of data from the homogenous fragments may be performed using a data reconstruction module **900,** for example as illustrated in **FIG. 9A.** The method may further comprise receiving a read request from the one or more client applications (step **910**). The read request may be for an object comprising the first segment and/or the second segment. The method may further comprise reconstructing the first and/or the second segment using at least in part the plurality of homogenous fragments and the sparse index, to generate the object in response to the read request (step **920**). The homogenous fragments may comprise one or more data chunks as described elsewhere herein.

The method may further comprise providing the reconstructed object to the one or more client applications (step **930**). The read request may utilize the sparse array index to quickly reconstruct or reconstitute the object. The sparse index array may point to each homogenous fragment to reconstruct the object requested by the client application. The data reconstruction module may save processing time and computational power, since the object can be reconstructed using the sparse index and homogenous fragments (e.g., collection of chunks) as opposed to all of the individual chunks.

### V. Data Chunking

The input data stream described herein may be segmented into variably sized segments. The segments of the data stream may be determined by pre-chunking the data stream into a set of chunks that may be assembled into one of segments. Each segment may be deduplicated without wasting of extra space. A deduplication chunk algorithm may be used to generate segments that may include a whole number of chunks. For example, a sliding window analysis of the data stream may be used to identify chunks by finding natural breaks in the data stream to support 4 kilobytes (kB) -16 kB chunks. In this example, the natural breaks may be generated by computing a hash of a 16-byte region and determining if that hash has a pattern that has the last 13 bits in the pattern as zeroes. The chunks may be further assembled into a segment within a target range (e.g., 1 megabyte (MB) to 8 MB, 2 MB to 16 MB, or some other range).

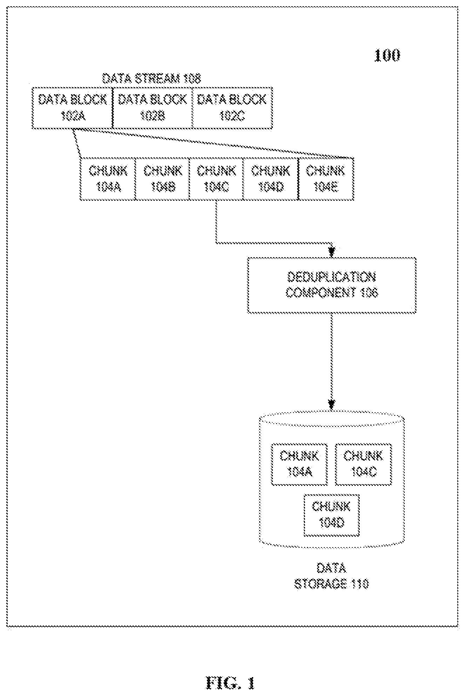

**FIG. 1** is a block diagram of a data chunking module **100** that may be used for deduplicating data before storing the data. In **FIG. 1****,** the data chunking module **100** may include data storage **110** that may be used to store the deduplicated chunks (e.g., chunks 104A, 104C, and 104D). The data storage **110** may be any type of data storage system that can deduplicate and/or store data (e.g., a storage system including a hard disk drive, sold state drive, memory, optical drive, tape drive, and/or another type of system capable of storing data; a distributed storage system; a cloud storage system; and/or another type of storage system). The data storage system may be a physical or virtual data storage system.

To deduplicate the data stream **108,** the data chunking module **100** may break up the data stream **108** into a set of data blocks **102A-C.** For example, three data blocks **102A-B** are illustrated, in alternate embodiments, there can be more or less data blocks **102A-C.** The size of the data blocks can range from 1 MB to 16 MB (e.g., range of 1 MB to 8 MB, 2 MB to 16 MB, or some other range), the data block size may be larger or smaller. In some cases, the data blocks may be evenly split, where each data block **102A-C** may have the same fixed size.

The deduplication component **106** may deduplicate the data blocks **102A-C** by partitioning each data block into smaller chunks **104A-E** and determines if each of the chunks **104A-E** may be currently stored in the data storage **110.** For example, for each of the chunks **104A-E,** the system **110** may compute a fingerprint of that chunk **104A-E.** In this embodiment, the fingerprint may be a mechanism used to uniquely identify each chunk **104A-E.** The fingerprint can be a cryptographic hash function, as one of the secure hashing algorithms (SHA) (e.g., SHA-1, SHA-256, etc. and/or another type of cryptographic hash functions). The fingerprint for each of the chunks **104A-E** may uniquely identify the chunk **104A-E** (assuming there are no data collisions in the fingerprint computation). The fingerprint may be used to determine whether one of the chunks **104A-E** is currently stored in the data storage **110.** The system **110** may store the chunk fingerprints in a database. For each chunk **104A-E** that may be stored, the data chunking module **100** may compute a fingerprint for a chunk (e.g., chunk **104A)** and may determine if that fingerprint exists in the fingerprint database. If the newly computed fingerprint is not in the database, the system **100** may store the corresponding chunk. If the chunk fingerprint matches one of the fingerprints in the database, then a copy of this chunk may be currently stored in the data storage **110.** In this case, the system **100** may not store the chunk. Instead, the system may increment a count of the number of references to this chunk in the data storage and may store a reference to that chunk. The reference count may be used to determine when that chunk can be deleted from the data storage **110.** As illustrated in **FIG. 1****,** because chunks **104A, 104C,** and **104D** are currently stored in the data storage **110,** system **100** may store chunk **104B** and **104E** for the data block **102A.** Because data block **104A, 104C,** and **104D** may be already stored in the data storage system **110.** As a result, the system **100** may not store those chunks. In some cases, the data storage system may exist outside of the data chunking module **100.**

As described in **FIG. 1****,** the data chunking module **100** may partition each data block into smaller chunks and may perform the deduplication analysis at the chunk level. The data chunking module **100** may partition a data block into equal sized chunks. However, this may lead to a poor determination of duplicate data as variably-sized objects in the data stream **102** may be haphazardly divided into random chunks. Alternatively, the data chunking module **100** may divide the data blocks into variably sized chunks with a more natural break, so as to find different objects in the data stream. This may increase the likelihood of finding duplicate chunks in the data stream. In some cases, a problem may occur, however, because if the system determines variably-sized chunks from fixed-sized data blocks, there may be a likelihood of having an extra chunk of data.

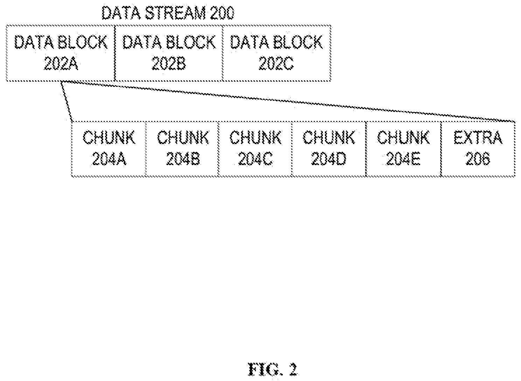

**FIG. 2** is a block diagram of pre-chunking a data stream **200** into a set of data blocks and chunks. In **FIG. 2****,** a data stream **200** may be divided into fixed-sized data blocks **202A-C** (e.g., 1 MB). As per above, there may be more or less than three data blocks **202A-C** for a data stream **200.** For data block **202A,** the system may partition the data block **202A** into chunks **204A-E.** Because the chunks may be variably sized (e.g. between 4 kB to 16 kB), there may be a possibility that there is an extra partition of data that does not fit a chunk definition. The system may chunk data block **2020A** into chunks **204A-E,** where there may be an extra chunk of data **206** that does not fit into the partitioning algorithm being used by the system. For example, the system may use a sliding window to find 4-16kB sized chunks **204A-E** by examining a sliding window of 16 bytes in the data block **202A-C** and may look for a pattern that has the last 13 bits in the pattern as zeroes. This, however, may leave an extra chunk **206** that does not fit within the pattern above. A consequence of this may be that this data could be wasted as it is unlikely that another chunk will have the same fingerprint as a fingerprint of the extra chunk **206.** The extra chunk **206** would be stored as a separate chunk that may be unlikely to have a duplicate. While this may not be much of a problem for smaller chunk sizes, as chunk sizes (and possibly data block sizes) get larger, the potential for data wastage may grow.

In some embodiments, a workaround for this may be to examine the beginning of the next data block for chunks that include the extra chunk **206.** For example, the extra chunk **206** may be analyzed in conjunction with the beginning of the next data block, data block **202B.** Examining the next data block may serialize the pre-chunking process, which may inhibit a parallelization of the overall deduplication process.

In some embodiments, instead of having fixed sized data blocks, the system may pre-chunk a data stream into variably-sized segments using the same or similar criteria as used to chunk a data block into multiple chunks. The system may analyze the data stream for chunks using the same or similar criteria that is used to chunk the data for the deduplication operation. Once the system may have enough chunks to include an amount of data that is within a range for a segment (e.g., a range of 1 MB to 8 MB, 2 MB to 16 MB, or some other range), the system may duplicate this segment. By performing this pre-chunking, the system may create segments that may be chunked without having an extra chunk as described in **FIG. 2** above. This may reduce wastage and may increase parallelization.

### VI. Data Segmenting

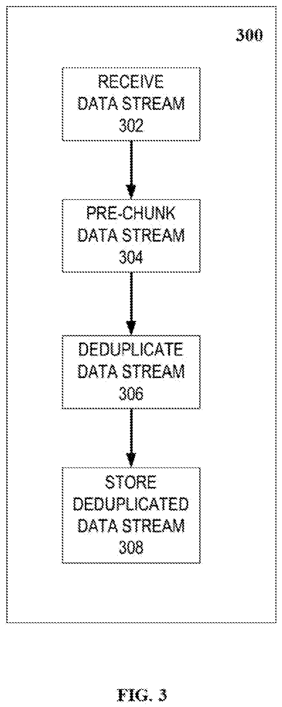

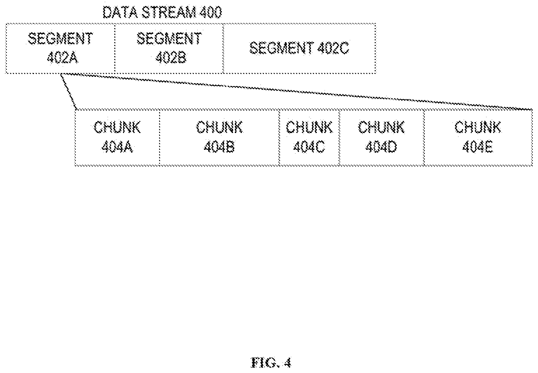

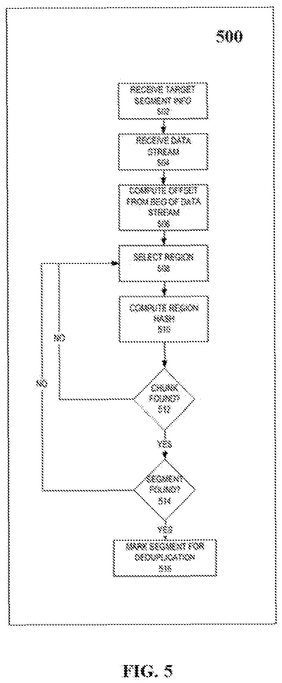

**FIG. 3** is a flow diagram of a segmenting module **300** configured to segment a data stream. In **FIG. 3****,** the segmenting module **300** may begin by receiving a data stream at block **302.** The data stream may be a file or another type of object that can be deduplicated. At block **302,** the segmenting module **300** may pre-chunk the data stream to create segments of chunks. The segments may include multiple clunks with no extras chunks. In some cases, the segmenting module **300** may pre-chunk the data stream using the same or similar criteria as the deduplication process for chunking a data block. Pre-chunking may be further described in **FIG. 4** and **FIG. 5** below. The segmenting module **300** may deduplicate the data stream using the segments at block **306.** The deduplication may be done serially or in parallel as the segments will not have any extra chunks for deduplication. The segmenting module **300** may chunk each of the segments and may perform deduplication on these chunks. For example, for each chunk, the segmenting module **300** may compute a fingerprint for each chunk and this fingerprint may be used to determine whether this chunk is currently stored in the data storage. The segmenting module **300** may store the chunk fingerprints in a database. For each chunk to be stored, the segmenting module **300** may compute a fingerprint for the chunk and may determine if that fingerprint exists in the fingerprint database. If the newly computed fingerprint is not in the database, the segmenting module **300** may store the corresponding chunk. If the chunk fingerprint matches one of the fingerprints in the database, then a copy of this chunk may be stored in the data storage. At block **308,** the process may store the deduplication data stream. The deduplicated data stream may include the unique chunks that are not currently stored in the data storage. The segmenting module **300** may store the deduplicated data stream as the data stream is being written or can be done after the initial storage (e.g., deduplicated in the background).

As described above, the segmenting module **300** may pre-chunk the data stream into a set of segments that are ready for the deduplication process. **FIG. 4** is a block diagram of pre-chunking a data stream **400** into a set of variable-sized data blocks and chunks. In **FIG. 4****,** the data stream **400** may be pre-chunked into variable sized segments. Each of the segments may be a whole number of chunks (e.g., where there is not an extra chunk as illustrated in the **FIG. 2** above). For example, segment **402A,** which is smaller than segments **402B or 402C,** may include chunks **404A-E.** In some cases, the chunks **404A-E** may be variably-sized, where there is not extra chunk that is part of the segment **402A.** Segment **402A** may be illustrated as being a smaller segment than segments **402B or 402C.** in some cases, the segment **402A** may not necessarily smaller than other data segments (e. g., can be larger than one, some or all of the segments, the same size as another segment, etc.).

### VII. Variable Segment Sizing

**FIG. 5** **is** a flow diagram of a variable segment sizing module **500** which may determine variable-sized segments for deduplication. In **FIG. 5****,** the variable segment sizing module **500** may begin by receiving target segment information at block **502.** The target segment information may have a range of bytes that can be used for determining the variably sized segments. For example, the target segment range may be from 1 MB to 8 MB, 2 MG to 16MB, or some other range. At block **504,** step **500** may receive the data stream. The data stream may be a file or another object that can be stored in the data storage.

The variable segment sizing module **500** may compute an offset from the beginning of the data steam at block **506.** The variable segment sizing module **500** may compute an offset that may be within a 4 kB to 16 kB range that may be used to find chunks. For example, the variable segment sizing module **500** may randomly compute an offset that may be within 4 kB 16 kB range from the beginning of the data stream. At block **508,** may select a region for an analysis. The variable segment sizing module **500** may select a 16-byte region to determine if there is a natural break in the data stream. Step **500** may compute a region hash at block **510.** The variable segment sizing module **500** may use a rolling hash to compute the region hash (e.g., Rabin-Karp, Rabin fingerprint, Cyclic fingerprint, Addler rolling hash, and/or some other type of rolling hash). The variable segment sizing module **500** may use a hash function algorithm as described elsewhere herein. The variable segment sizing module **500** may compute this hash as a way to determine if there is a natural break in the in the data stream. At block **512,** the variable segment sizing module **500** may determine if a chunk found. The variable segment sizing module **500** may determine if there is a chunk by determining that the hash computed for the 16-byte region has at least 13 of the last bits of the hash are zero. The variable segment sizing module **500** may use different criteria for determining if a chunk is found (e.g., different number of zeros, a different pattern, etc.). If a chunk is found, execution may proceed to block **514.** If a chunk is not found, execution may proceed to block **508,** where a new region may be selected by advancing the window in the data stream for analysis.

At block **514,** the variable segment sizing module **500** may determine if a segment is found. The variable segment sizing module **500** may determine, is a segment found, by summing up the lengths of the chunks as may be determined by variable segment sizing module **500** for those that are not currently part of an identified segment. If the sum of these lengths is within the target segment size range, the variable segment sizing module **500** may determine that a new segment has been found and execution may proceed to block **516.** If a segment is not found, execution may proceed to block **508,** where a new region may be selected by advancing the window in the data stream for analysis for a new chunk. At block **518,** the variable segment sizing module **500** may mark the segment for deduplication. The variable segment sizing module **500** may mark this segment for deduplication, where the segment may be later deduplicated.

### Computer systems

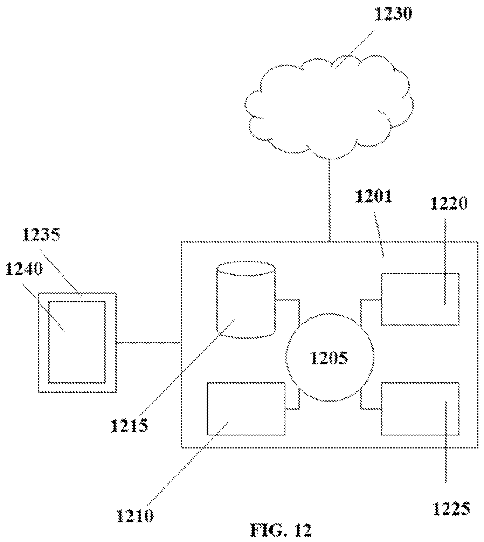

The present disclosure provides computer systems that are programmed to implement methods of the disclosure. **FIG. 12** shows a computer system **1201** that is programmed or otherwise configured to intake an input data stream, generate one or more segments from the input data stream, produce hash values for one or more chunks of the one or more segments, produce features from the one or more hash values, compute a sketch of the one or more segments, compare one or more sketches of the one or more segments from the one or more input data streams, difference the one or more segments, store one or more chunks in a database, reduce data duplication, and reconstruct data from one or more read requests. The computer system **1201** can regulate various aspects of sketch computation, sketch comparison, segment differencing, and data reconstruction of the present disclosure, such as, for example, the hashing algorithms for producing hash values for the one or more chunks may be regulated to obtain different features for the sketch computation and sketch comparison. The computer system **1201** can be an electronic device of a user or a computer system that is remotely located with respect to the electronic device. The electronic device can be a mobile electronic device.

The computer system **1201** includes a central processing unit (CPU, also "processor" and "computer processor" herein) **1205,** which can be a single core or multi core processor, or a plurality of processors for parallel processing. The computer system **1201** also includes memory or memory location **1210** (e.g., random-access memory, read-only memory, flash memory), electronic storage unit **1215** (e.g., hard disk), communication interface **1220** (e.g., network adapter) for communicating with one or more other systems, and peripheral devices **1225,** such as cache, other memory, data storage and/or electronic display adapters. The memory **1210,** storage unit **1215,** interface **1220** and peripheral devices **1225** are in communication with the CPU **1205** through a communication bus (solid lines), such as a motherboard. The storage unit **1215** can be a data storage unit (or data repository) for storing data. The computer system **1201** can be operatively coupled to a computer network ("network") **1230** with the aid of the communication interface **1220.** The network **1230** can be the Internet, an internet and/or extranet, or an intranet and/or extranet that is in communication with the Internet. The network **1230** in some cases is a telecommunication and/or data network. The network **1230** can include one or more computer servers, which can enable distributed computing, such as cloud computing. The network **1230,** in some cases with the aid of the computer system **1201,** can implement a peer-to-peer network, which may enable devices coupled to the computer system **1201** to behave as a client or a server.

The CPU **1205** can execute a sequence of machine-readable instructions, which can be embodied in a program or software. The instructions may be stored in a memory location, such as the memory **1210.** The instructions can be directed to the CPU **1205,** which can subsequently program or otherwise configure the CPU **1205** to implement methods of the present disclosure. Examples of operations performed by the CPU **1205** can include fetch, decode, execute, and writeback.

The CPU **1205** can be part of a circuit, such as an integrated circuit. One or more other components of the system **1201** can be included in the circuit. In some cases, the circuit is an application specific integrated circuit (ASIC).

The storage unit **1215** can store files, such as drivers, libraries and saved programs. The storage unit **1215** can store user data, e.g., user preferences and user programs. The computer system **1201** in some cases can include one or more additional data storage units that are external to the computer system **1201,** such as located on a remote server that is in communication with the computer system **1201** through an intranet or the Internet.

The computer system **1201** can communicate with one or more remote computer systems through the network **1230.** For instance, the computer system **1201** can communicate with a remote computer system of a user. Examples of remote computer systems include personal computers (e.g., portable PC), slate or tablet PC's (e.g., Apple^{®} iPad, Samsung^{®} Galaxy Tab), telephones, Smart phones (e.g., Apple^{®} iPhone, Android-enabled device, Blackberry^{®}), or personal digital assistants. The user can access the computer system **1201** via the network **1230.**

Methods as described herein can be implemented by way of machine (e.g., computer processor) executable code stored on an electronic storage location of the computer system **1201,** such as, for example, on the memory **1210** or electronic storage unit **1215.** The machine executable or machine readable code can be provided in the form of software. During use, the code can be executed by the processor **1205.** In some cases, the code can be retrieved from the storage unit **1215** and stored on the memory **1210** for ready access by the processor **1205.** In some situations, the electronic storage unit **1215** can be precluded, and machine-executable instructions are stored on memory **1210.**

The code can be pre-compiled and configured for use with a machine having a processer adapted to execute the code, or can be compiled during runtime. The code can be supplied in a programming language that can be selected to enable the code to execute in a pre-compiled or as-compiled fashion.

Aspects of the systems and methods provided herein, such as the computer system **1201,** can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system **1201** can include or be in communication with an electronic display 1235 that comprises a user interface (UI) 1240 for providing, for example, the hashing algorithms for feature determination of the plurality of chunks for sketching. Examples of UI's include, without limitation, a graphical user interface (GUI) and web-based user interface.

Methods and systems of the present disclosure can be implemented by way of one or more algorithms. An algorithm can be implemented by way of software upon execution by the central processing unit **1205.** The algorithm can, for example, produce a minimum hash value from a set of hash values for a plurality of chunks.

While preferred embodiments of the present invention have been shown and described herein, it will be obvious to those skilled in the art that such embodiments are provided by way of example only. It is not intended that the invention be limited by the specific examples provided within the specification but only by the scope of the appended claims. While the invention has been described with reference to the aforementioned specification, the descriptions and illustrations of the embodiments herein are not meant to be construed in a limiting sense.

## Claims

1. A method for data reduction, comprising:
(a) receiving one or more input data streams from one or more client applications;
(b) generating at least a first variably sized segment and a second variably sized segment from said one or more input data streams, wherein generating said first variably sized segment and said second variably sized segment comprises identifying a first plurality of variably sized chunks and a second plurality of variably sized chunks by finding one or more natural breaks in said one or more input data streams through computing a hash on a sliding window running over said one or more input data streams, and assembling said first plurality of variably sized chunks and said second plurality of variably sized chunks into said first variably sized segment or said second variably sized segment within a target range;
(c) computing (i) a first sketch of said first segment and (ii) a second sketch of said second segment, wherein said first sketch comprises a first set of features that are representative of or unique to said first segment and said first set of features are computed based on a plurality of hashes associated with a first subset of chunks selected from said first plurality of chunks, wherein said second sketch comprises a second set of features that are representative of or unique to said second segment and said second set of features are computed based on a plurality of hashes associated with a second subset of chunks selected from said second plurality of chunks, wherein said first set of features corresponds to said first segment and said second set of features corresponds to said second segment;
(d) comparing said first sketch with said second sketch to generate a similarity metric indicative of a degree of overlap between said first segment and said second segment; and
(e) subsequent to (d), (1) when said similarity metric is greater than or equal to a similarity threshold, performing a differencing operation on said second segment relative to said first segment to determine, by comparing the chunks of the first segment and the second segment, which chunks of the second segment are common to the first segment, or (2) storing said first segment and said second segment in a database without performing said differencing operation when said similarity metric is less than said similarity threshold, wherein said differencing operation comprises:
(i) generating a reference set of hashes for said first plurality of chunks of said first segment,
(ii) storing said reference set of hashes in a memory table,
(iii) generating a second set of hashes for said second plurality of chunks of said second segment, and
(iv) comparing said second set of hash to said reference set of hashes in a sequential order to determine if there is a match, and
generating and storing a single pointer that references collectively to a series of sequential chunks from said a subset of said second plurality of chunks, upon determining that the series of sequential chunks have hashes that find a match from said reference set of hashes, and a follow-on subsequent chunk to said series of sequential chunks does not find a match from said reference set of hashes.

2. The method of claim 1, wherein said reference set of hashes comprises weak hashes.

3. The method of claim 1, wherein said reference set of hashes is generated using a hashing function having a throughput of at least a gigabyte (GB) scale.

4. The method of claim 1, wherein said single pointer is used in part to produce a sparse index comprising a reduced set of pointers.

5. The method of claim 1, wherein said differencing operation reduces said first segment and said second segment into a plurality of homogenous fragments.

6. The method of claim 1, wherein said first subset of chunks is less than 10% of said first plurality of chunks.

7. The method of claim 1, wherein said first subset of chunks is less than 1% of said first plurality of chunks.

8. The method of claim 1, wherein said second segment is determined to be (i) similar to said first segment when said similarity metric is greater than or equal to said similarity threshold, or (ii) non-similar to said first segment when said similarity metric is less than said similarity threshold optionally wherein said similarity threshold is at least about 50%.

9. The method of claim 1, wherein said second subset of chunks is less than 10% of said second plurality of chunks.

10. The method of claim 1, wherein said second subset of chunks is less than 1% of said second plurality of chunks.

11. The method of claim 1, wherein said first plurality of chunks and said second plurality of chunks have variable lengths.

12. The method of claim 1, wherein said similarity metric is a similarity score.

## Patentansprüche

1. Ein Verfahren zur Datenreduktion, das Folgendes beinhaltet:
(a) Empfangen eines oder mehrerer Eingabedatenströme von einer oder mehreren Client-Anwendungen;
(b) Erzeugen mindestens eines ersten Segments mit variabler Größe und eines zweiten Segments mit variabler Größe aus dem einen oder den mehreren Eingabedatenströmen, wobei das Erzeugen des ersten Segments mit variabler Größe und des zweiten Segments mit variabler Größe das Identifizieren einer ersten Vielzahl von Blöcken mit variabler Größe und einer zweiten Vielzahl von Blöcken mit variabler Größe durch Finden einer oder mehrerer natürlicher Unterbrechungen in dem einen oder den mehreren Eingabedatenströmen durch Berechnen eines Hash an einem gleitenden Fenster, das über den einen oder die mehreren Eingabedatenströme läuft, und Zusammensetzen der ersten Vielzahl von Blöcken mit variabler Größe und der zweiten Vielzahl von Blöcken mit variabler Größe zu dem ersten Segment mit variabler Größe oder dem zweiten Segment mit variabler Größe innerhalb eines Zielbereichs beinhaltet;
(c) Berechnen (i) eines ersten Sketches des ersten Segments und (ii) eines zweiten Sketches des zweiten Segments, wobei der erste Sketch einen ersten Satz Merkmale beinhaltet, die repräsentativ für oder eindeutig für das erste Segment sind, und der erste Satz Merkmale basierend auf einer Vielzahl von Hashes berechnet wird, die mit einem ersten Teilsatz von Blöcken assoziiert sind, die aus der ersten Vielzahl von Blöcken ausgewählt sind, wobei der zweite Sketch einen zweiten Satz Merkmale beinhaltet, die repräsentativ für oder eindeutig für das zweite Segment sind, und der zweite Satz Merkmale basierend auf einer Vielzahl von Hashes berechnet wird, die mit einem zweiten Teilsatz von Blöcken assoziiert sind, die aus der zweiten Vielzahl von Blöcken ausgewählt sind, wobei der erste Satz Merkmale dem ersten Segment und der zweite Satz Merkmale dem zweiten Segment entspricht;
(d) Vergleichen des ersten Sketches mit dem zweiten Sketch, um eine Ähnlichkeitsmetrik zu erzeugen, die indikativ für einen Überlappungsgrad zwischen dem ersten Segment und dem zweiten Segment ist; und
(e) im Anschluss an (d), (1) wenn die Ähnlichkeitsmetrik größer als oder gleich einem Ähnlichkeitsschwellenwert ist, Durchführen einer Unterscheidungsoperation an dem zweiten Segment relativ zu dem ersten Segment, um durch Vergleichen der Blöcke des ersten Segments und des zweiten Segments zu bestimmen, welche Blöcke des zweiten Segments dem ersten Segment gemeinsam sind, oder (2) Speichern des ersten Segments und des zweiten Segments in einer Datenbank ohne das Durchführen der Unterscheidungsoperation, wenn die Ähnlichkeitsmetrik kleiner als der Ähnlichkeitsschwellenwert ist, wobei die Unterscheidungsoperation Folgendes beinhaltet:
(i) Erzeugen eines Referenzsatzes von Hashes für die erste Vielzahl von Blöcken des ersten Segments,
(ii) Speichern des Referenzsatzes von Hashes in einer Speichertabelle,
(iii) Erzeugen eines zweiten Satzes von Hashes für die zweite Vielzahl von Blöcken des zweiten Segments, und
(iv) Vergleichen des zweiten Satzes von Hashes mit dem Referenzsatz von Hashes in einer sequentiellen Reihenfolge, um zu bestimmen, ob es eine Übereinstimmung gibt, und
Erzeugen und Speichern eines einzelnen Zeigers, der kollektiv auf eine Reihe von sequentiellen Blöcken aus dem einen Teilsatz der zweiten Vielzahl von Blöcken verweist, nach dem Bestimmen, dass die Reihe von sequentiellen Blöcken Hashes aufweisen, die eine Übereinstimmung aus dem Referenzsatz von Hashes finden, und ein darauffolgender anschließender Block der Reihe von sequentiellen Blöcken keine Übereinstimmung aus dem Referenzsatz von Hashes findet.

2. Verfahren gemäß Anspruch 1, wobei der Referenzsatz von Hashes schwache Hashes beinhaltet.

3. Verfahren gemäß Anspruch 1, wobei der Referenzsatz von Hashes unter Verwendung einer Hash-Funktion erzeugt wird, die einen Durchsatz von einer Größenordnung von mindestens einem Gigabyte (GB) aufweist.

4. Verfahren gemäß Anspruch 1, wobei der einzelne Zeiger teilweise verwendet wird, um einen dünnbesetzten Index zu erstellen, der eine reduzierte Zahl von Zeigern beinhaltet.

5. Verfahren gemäß Anspruch 1, wobei die Unterscheidungsoperation das erste Segment und das zweite Segment in eine Vielzahl von homogenen Fragmenten reduziert.

6. Verfahren gemäß Anspruch 1, wobei der erste Teilsatz von Blöcken kleiner als 10 % der ersten Vielzahl von Blöcken ist.

7. Verfahren gemäß Anspruch 1, wobei der erste Teilsatz von Blöcken kleiner als 1 % der ersten Vielzahl von Blöcken ist.

8. Verfahren gemäß Anspruch 1, wobei das zweite Segment bestimmt wird als (i) dem ersten Segment ähnlich, wenn die Ähnlichkeitsmetrik größer als oder gleich der Ähnlichkeitsschwelle ist, oder (ii) dem ersten Segment unähnlich, wenn die Ähnlichkeitsmetrik kleiner als die Ähnlichkeitsschwelle ist, wobei die Ähnlichkeitsschwelle optional mindestens ungefähr 50 % beträgt.

9. Verfahren gemäß Anspruch 1, wobei der zweite Teilsatz von Blöcken kleiner als 10 % der zweiten Vielzahl von Blöcken ist.

10. Verfahren gemäß Anspruch 1, wobei der zweite Teilsatz von Blöcken kleiner als 1 % der zweiten Vielzahl von Blöcken ist.

11. Verfahren gemäß Anspruch 1, wobei die erste Vielzahl von Blöcken und die zweite Vielzahl von Blöcken variable Längen aufweisen.

12. Verfahren gemäß Anspruch 1, wobei die Ähnlichkeitsmetrik ein Ähnlichkeitswert ist.

## Revendications

1. Un procédé de réduction de données, comprenant :
(a) la réception d'un ou de plusieurs flux de données d'entrée en provenance d'une ou de plusieurs applications client ;
(b) la génération au moins d'un premier segment de taille variable et d'un deuxième segment de taille variable à partir desdits un ou plusieurs flux de données d'entrée, la génération dudit premier segment de taille variable et dudit deuxième segment de taille variable comprenant l'identification d'une première pluralité de morceaux de taille variable et d'une deuxième pluralité de morceaux de taille variable par recherche d'une ou de plusieurs coupures naturelles dans lesdits un ou plusieurs flux de données d'entrée au moyen du calcul d'une valeur de hachage sur une fenêtre glissante s'étendant sur lesdits un ou plusieurs flux de données d'entrée, et l'assemblage de ladite première pluralité de morceaux de taille variable et de ladite deuxième pluralité de morceaux de taille variable en ledit premier segment de taille variable ou ledit deuxième segment de taille variable à l'intérieur d'une plage cible ;
(c) le calcul (i) d'un premier schéma dudit premier segment et (ii) d'un deuxième schéma dudit deuxième segment, ledit premier schéma comprenant un premier ensemble de caractéristiques qui sont représentatives dudit premier segment ou particulières à celui-ci et ledit premier ensemble de caractéristiques étant calculées sur la base d'une pluralité de valeurs de hachage associées à un premier sous-ensemble de morceaux sélectionnés parmi ladite première pluralité de morceaux, ledit deuxième schéma comprenant un deuxième ensemble de caractéristiques qui sont représentatives dudit deuxième segment ou particulières à celui-ci et ledit deuxième ensemble de caractéristiques étant calculées sur la base d'une pluralité de valeurs de hachage associées à un deuxième sous-ensemble de morceaux sélectionnés parmi ladite deuxième pluralité de morceaux, ledit premier ensemble de caractéristiques correspondant audit premier segment et ledit deuxième ensemble de caractéristiques correspondant audit deuxième segment ;
(d) la comparaison dudit premier schéma avec ledit deuxième schéma pour générer une métrique de similarité indicative d'un degré de chevauchement entre ledit premier segment et ledit deuxième segment ; et
(e) postérieurement à (d), (1) lorsque ladite métrique de similarité est supérieure ou égale à un seuil de similarité, la réalisation d'une opération de différenciation sur ledit deuxième segment relativement audit premier segment pour déterminer, par comparaison des morceaux du premier segment et du deuxième segment, quels morceaux du deuxième segment sont communs au premier segment, ou (2) le stockage dudit premier segment et dudit deuxième segment dans une base de données sans réalisation de ladite opération de différenciation lorsque ladite métrique de similarité est inférieure audit seuil de similarité, ladite opération de différenciation comprenant :
(i) la génération d'un ensemble de valeurs de hachage de référence pour ladite première pluralité de morceaux dudit premier segment,
(ii) le stockage dudit ensemble de valeurs de hachage de référence dans une table de mémoire,
(iii) la génération d'un deuxième ensemble de valeurs de hachage pour ladite deuxième pluralité de morceaux dudit deuxième segment, et
(iv) la comparaison dudit deuxième ensemble de valeurs de hachage audit ensemble de valeurs de hachage de référence dans un ordre séquentiel pour déterminer s'il existe une concordance, et
la génération et le stockage d'un pointeur unique qui fait référence collectivement à une série de morceaux séquentiels tirés dudit sous-ensemble de ladite deuxième pluralité de morceaux, à la suite de la détermination du fait que la série de morceaux séquentiels ont des valeurs de hachage qui trouvent une concordance parmi ledit ensemble de valeurs de hachage de référence, et qu'un morceau subséquent qui suit ladite série de morceaux séquentiels ne trouve pas de concordance parmi ledit ensemble de valeurs de hachage de référence.

2. Le procédé de la revendication 1, dans lequel ledit ensemble de valeurs de hachage de référence comprend des valeurs de hachage faible.

3. Le procédé de la revendication 1, dans lequel ledit ensemble de valeurs de hachage de référence est généré à l'aide d'une fonction de hachage ayant un débit au moins à l'échelle du gigaoctet (Go).

4. Le procédé de la revendication 1, dans lequel ledit pointeur unique est utilisé en partie pour produire un index creux comprenant un ensemble de pointeurs réduit.

5. Le procédé de la revendication 1, dans lequel ladite opération de différenciation réduit ledit premier segment et ledit deuxième segment en une pluralité de fragments homogènes.

6. Le procédé de la revendication 1, dans lequel ledit premier sous-ensemble de morceaux contient moins de 10 % de ladite première pluralité de morceaux.

7. Le procédé de la revendication 1, dans lequel ledit premier sous-ensemble de morceaux contient moins de 1 % de ladite première pluralité de morceaux.

8. Le procédé de la revendication 1, dans lequel il est déterminé que ledit deuxième segment est (i) similaire audit premier segment lorsque ladite métrique de similarité est supérieure ou égale audit seuil de similarité, ou (ii) non similaire audit premier segment lorsque ladite métrique de similarité est inférieure audit seuil de similarité, facultativement dans lequel ledit seuil de similarité est au moins d'environ 50 %.

9. Le procédé de la revendication 1, dans lequel ledit deuxième sous-ensemble de morceaux contient moins de 10 % de ladite deuxième pluralité de morceaux.

10. Le procédé de la revendication 1, dans lequel ledit deuxième sous-ensemble de morceaux contient moins de 1 % de ladite deuxième pluralité de morceaux.

11. Le procédé de la revendication 1, dans lequel ladite première pluralité de morceaux et ladite deuxième pluralité de morceaux ont des longueurs variables.

12. Le procédé de la revendication 1, dans lequel ladite métrique de similarité est un score de similarité.
